# EUROPÄISCHE PATENTSCHRIFT

(11) **EP 0 505 601 B1**
(45) Veröffentlichungstag und Bekanntmachung des Hinweises auf die Patenterteilung: **10.01.1996**
(21) Anmeldenummer: 91105064.9
(22) Anmeldetag: 28.03.1991
(51) Int. Cl.: H04L 12/56

(54) **Verfahren zum Weiterleiten von redundanten Nachrichtenpaketen über redundante Koppelanordnungen**
Method for forwarding redundant information packets via redundant switching arrangements
Procédé pour transmettre des paquets d'information redondants via des dispositifs de commutation redondants

(43) Veröffentlichungstag der Anmeldung: 30.09.1992
(73) Patentinhaber: SIEMENS AKTIENGESELLSCHAFT, D-80333 München (DE)
(72) Erfinder: Lutz, Karl-Anton, Dipl.-Ing., W-8000 München 71 (DE)

(56) Entgegenhaltungen:
- EP-A- 0 384 936

## Beschreibung

Die Erfindung betrifft ein Verfahren zur Aufnahme und Weitergabe von im Zuge von virtuellen Verbindungen nach einem asynchronen Übertragungsverfahren auf Zubringerleitungen ankommenden Nachrichtenpaketen über eine zumindest gedoppelte redundante Paketvermittlungs-Koppelanordnung mit daran angeschlossenen Abnehmerleitungen, unter Bildung jeweils einer der Anzahl der redundanten Koppelanordnungen entsprechenden Anzahl von redundanten Nachrichtenpaketen durch entsprechende Vermehrfachung der einzelnen ankommenden Nachrichtenpakete, Vermittlung der untereinander redundanten Nachrichtenpakete über die untereinander redundanten Koppelanordnungsebenen und Weiterleitung jeweils nur eines der vermittelten, untereinander redundanten Nachrichtenpakete zu der in Frage kommenden Abnehmerleitung hin.
Ein solches Verfahren und eine entsprechende Schaltungsanordnung sind beispielsweise aus der EP-A1-0 384 936 bekannt.

Werden in diesem Zusammenhang aus Gründen der Redundanz der Übertragungssysteme auch die Zubringer- und Abnehmerleitungen zumindest gedoppelt, so stellt sich die Aufgabe einer Überwachung dieser Übertragungssysteme, und die Erfindung zeigt einen besonders zweckmäßigen Weg dazu.

Gelöst wird die vorstehend angesprochene Aufgabe bei einem Verfahren der eingangs genannten Art erfindungsgemäß dadurch, daß von den über eine ebenfalls zumindest gedoppelte redundante Zubringerleitung ankommenden, untereinander redundanten Nachrichtenpaketen nach ihrer jeweiligen Vermehrfachung im Paketkopf als Operations- und Maintenance-Zellen oder auch als Test-Zellen gekennzeichnete Nachrichtenpakete jeweils jeder Zubringerleitung von zumindest gedoppelten Zubringerleitungen und im Paketkopf als Nutzinformations-Zellen gekennzeichnete Nachrichtenpakete lediglich jeweils einer Zubringerleitung der zumindest gedoppelten Zubringerleitungen zu den zumindest gedoppelten Koppelanordnungen hin weitergeleitet werden und daß von den über die zumindest gedoppelten Koppelanordnungen vermittelten, untereinander redundanten Nachrichtenpaketen jeweils lediglich eines an jede der in Frage kommenden Abnehmerleitungen von ebenfalls zumindest gedoppelten Abnehmerleitungen weitergeleitet wird.

Die Erfindung bringt den Vorteil mit sich, eine ständige Überwachung der zur Paketvermittlung hin- bzw. wegführenden Übertragungswege ermöglichen können, ohne daß es dazu ständiger Routineumschaltungen zwischen den untereinander redundanten Übertragungswegen bedarf; dadurch, daß die im Paketkopf als Steuerzellen (Operations- und Maintenance-Zellen oder auch Test-Zellen) gekennzeichneten Nachrichtenpakete jeweils jeder Zubringerleitung der(zumindest) gedoppelten Zubringerleitungen weitergeleitet werden, wird eine Überwachung auch derjenigen Zubringerleitung(en) ermöglicht, von der(denen) her die darüber ankommenden, im Paketkopf als Nutzinformations-Zellen gekennzeichneten Nachrichtenpakete gerade nicht weitergeleitet werden.

Weitere Besonderheiten der Erfindung werden aus der nachfolgenden näheren Erläuterung der Erfindung anhand der Zeichnung ersichtlich. Dabei zeigt
FIG 1 ein zu einer redundanten Koppelanordnung hinführendes, ebenfalls redundantes Zubringersystem und
FIG 2 ein von der redundanten Koppelanordnung wegführendes, ebenfalls redundantes Abnehmersystem.

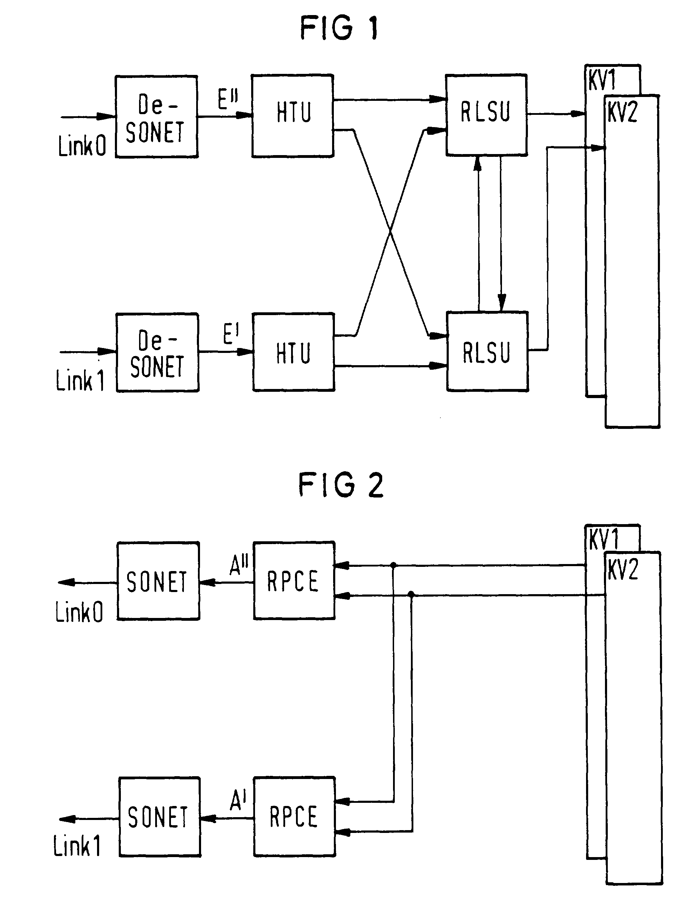

In dem in FIG 1 skizzierten Zubringersystem führen gedoppelte (redundante) Zubringerleitungen E', E" über sog. Header Translation Units HTU, und nachfolgende sog. Redundant Link Selecting Units RLSU zur gedoppelten Koppelanordnung KV1, KV2. Die Header Translation Units HTU können in dem hier interessierenden Zusammenhang in im Prinzip aus FIG 2 der EP-A1-0 384 396 bekannter Weise ausgebildet sein. Die Redundant Link Selecting Units RLSU sind in gegenseitiger Abhängigkeit stehende Auswahlschaltungen mit jeweils zwei Eingängen und einem Ausgang, die beide eingangsseitig mit den jeweils beiden Ausgängen beider Header Translation Units HTU verbunden sind und die die ihnen zugeführten Nachrichtenpakete nach Maßgabe einer dem jeweiligen Paketkopf entnommenen Steuerinformation passieren oder nicht passieren lassen. Wie aus FIG 1 noch ersichtlich ist, kann zwischen die Zubringerleitung E', E" und den eigentlichen ankommenden Übertragungsweg Link 1, Link 0 jeweils noch ein sog. Desonetizer De-SONET eingefügt sein, wenn man beispielsweise davon ausgeht, daß auf dem ankommenden Übertragungssystem die auf den Zubringerleitungen E', E" in einem Asynchron Transfer Mode auftretenden Nachrichten auf dem Übertragungs-Link Link 1, Link 0 in einem entsprechenden Synchron Transfer Mode übertragen worden sind.

Das in FIG 2 skizzierte abgehende Übertragungssystem weist gedoppelte (redundante) Abnehmerleitungen A', A" auf, die über sog. Redundant Path Combining Elements RPCE an die gedoppelte Koppelanordnung KV1, KV2 angeschlossen sind. Solche Redundant Path Combining Elements können in dem hier interessierenden Zusammenhang in im Prinzip aus FIG 3 der EP-A1-0 384 936 bekannter Weise ausgebildet sein. Analog zur Darstellung in FIG 1 können zwischen die Abnehmerleitungen A', A" und die eigentlichen Übertragungslinks Link 1, Link 0 noch sog. Sonetizer SONET eingefügt sein, wenn man davon ausgeht, daß auf den Links Link 1, Link 0 die Nachrichten in einem entsprechenden Synchron Transfer Mode übertragen werden sollen.

Die anhand von FIG 1 und FIG 2 skizzierte Schaltungsanordnung arbeitet dann wie folgt.
Von den über die gedoppelte Koppelanordnung KV1, KV2 zu dem in FIG 2 skizzierten Abnehmersystem Link 1, Link 0 hin vermittelten, untereinander redundanten Nachrichtenpaketen wird in jedem der beiden Redundant Path Combining Elements RPCE jeweils lediglich eines an die beiden Äste A' und A" der zugehörigen gedoppelten Abnehmerleitung A', A" weitergeleitet.

In der umgekehrten Übertragungsrichtung werden die von dem in FIG 1 skizzierten Übertragungssystem Link 1, Link 0 her über die gedoppelte Zubringerleitung E', E" ankommenden, untereinander redundanten Nachrichtenpakete jeweils in der jeweiligen Header Translation Unit HTU verdoppelt. Nach dieser Vermehrfachung gelangen die Nachrichtenpakete jeder der beiden Header Translation Units HTU zu beiden Redundant Link Selecting Units RLSU. Dort leitet jede der beiden Redundant Link Selecting Units RLSU die im Paketkopf als Operations- und Maintenance-Zellen oder auch als Test-Zellen gekennzeichneten Nachrichtenpakete, d. h., allgemein gesprochen, sog. Steuerzellen, jeder der beiden Äste E',E" der gedoppelten Zubringerleitung E', E" zu der jeweils zugehörigen Koppelanordnungsebene KV1 bzw. KV2 hin weiter, während von den im Paketkopf als Nutzinformations-Zellen gekennzeichneten Nachrichtenpaketen in den beiden Redundant Link Selecting Units RLSU lediglich diejenigen Nachrichtenpakete zu jeweils zugehörigen Koppelanordnungsebene KV1, KV2 hin weitergeleitet werden, die von einem der beiden Zubringerleitungsäste, d. h. von der Zubringerleitung E' oder von der Zubringerleitung E" her zugeführt werden. Während so bezüglich der jeweils übertragenen Nutzinformations-Nachrichtenpakete jeweils nur eines der beiden Übertragungssysteme Link 1, Link 0 (in FIG 1) tatsächlich genutzt wird, ermöglicht zugleich die Weiterleitung auch derjenigen Steuerinformations-Nachrichtenpakete, die über das jeweils andere Übertragungssystem (Link 0 bzw. Link 1 in FIG 1) übertragen worden sind, eine ständige Überwachung auch dieses anderen Übertragungssystems ohne daß es einer ständige Routineumschaltung zwischen beiden Übertragungssystemen bedürfte.

## Patentansprüche

1. Verfahren zur Aufnahme und Weitergabe von im Zuge von virtuellen Verbindungen nach einem asynchronen Übertragungsverfahren auf Zubringerleitungen (E) ankommenden Nachrichtenpaketen über eine zumindest gedoppelte redundante Paketvermittlungs-Koppelanordnung (KV1, KV2) mit daran angeschlossenen Abnehmerleitungen, unter Bildung jeweils einer der Anzahl der redundanten Koppelanordnungen (KV1, KV2) entsprechenden Anzahl von redundanten Nachrichtenpaketen durch entsprechende Vermehrfachung der einzelnen ankommenden Nachrichtenpakete, Vermittlung der untereinander redundanten Nachrichtenpakete über die untereinander redundanten Koppelanordnungen und Weiterleitung jeweils nur eines der vermittelten, untereinander redundanten Nachrichtenpakete zu der in Frage kommenden Abnehmerleitung hin,
**dadurch gekennzeichnet,**
daß von den über eine ebenfalls zumindest gedoppelte redundante Zubringerleitung (E', E") ankommenden, untereinander redundanten Nachrichtenpaketen nach ihrer jeweiligen Vermehrfachung im Paketkopf als Operations- und Maintenance-Zellen oder auch als Test-Zellen gekennzeichnete Nachrichtenpakete jeweils jeder Zubringerleitung (E' **und** E") von zumindest gedoppelten Zubringerleitungen (E', E") und im Paketkopf als Nutzinformations-Zellen gekennzeichnete Nachrichtenpakete lediglich jeweils einer Zubringerleitung (E' **oder** E") der zumindest gedoppelten Zubringerleitungen (E', E") zu den zumindest gedoppelten Koppelanordnungen (KV1, KV2) hin weitergeleitet werden
und daß von den über die zumindest gedoppelten Koppelanordnungen (KV1, KV2) vermittelten, untereinander redundanten Nachrichtenpaketen jeweils lediglich eines an jede der in Frage kommenden Abnehmerleitungen (A' **und** A") von ebenfalls zumindest gedoppelten Abnehmerleitungen (A', A") weitergeleitet wird.

## Claims

1. Method for receiving and forwarding information packets arriving on offering trunks (E) in the course of virtual connections in accordance with an asynchronous transmission method via an at least doubly redundant packet-switching switching arrangement (KV1, KV2) with serving trunks connected thereto, with the formation in each case of a number of redundant information packets corresponding to the number of redundant switching arrangements (KV1, KV2) by means of suitable replication of the individually arriving information packets, switching of the mutually redundant information packets via the mutually redundant switching arrangements and forwarding in each case only one of the switched mutually redundant information packets to the serving trunk in question, characterized in that, of the mutually redundant information packets arriving via a likewise at least doubly redundant offering trunk (E', E"), after their respective replication, information packets of in each case every offering trunk (E' and E") of at least duplicated offering trunks (E', E"), which information packets are identified in the packet header as operation and maintenance cells or else as test cells, and information packets of in each case only one offering trunk (E' or E") of the at least duplicated offering trunks (E', E"), which information packets are identified in the packet header as user information cells, are forwarded to the at least duplicated switching arrangements (KV1, KV2), and in that, of the mutually redundant information packets switched via the at least duplicated switching arrangements (KV1, KV2), in each case only one is forwarded to each of the serving trunks (A' and A") in question of likewise at least duplicated serving trunks (A', A").

## Revendications

1. Procédé de reception et de retransmission de paquets d'informations, qui arrivent dans des lignes d'arrivée (E) au cours de liaisons virtuelles selon un procédé de transmission asynchrone, par l'intermédiaire d'un réseau (KV1, KV2) redondant de connexion de commutation de paquets, qui est au moins en double et auquel sont raccordées des lignes de départ, par formation d'un certain nombre de paquets redondants d'informations, qui correspond au nombre des réseaux de connexion redondants (KV1, KV2), à l'aide d'une multiplication correspondante des divers paquets d'informations arrivant, d'une commutation des paquets d'informations redondants entre eux, par l'intermédiaire des réseaux de connexion, qui sont redondants entre eux, et d'une retransmission d'un seul des paquets commutés d'informations, qui sont redondants entre eux, en direction de la ligne de départ considérée,
caractérisé par le fait
que parmi les paquets d'informations redondants entre eux, qui arrivent par l'intermédiaire d'une ligne d'arrivée redondante (E',E"), qui est également au moins en double, après multiplication de ces paquets d'informations, on retransmet des paquets d'informations, caractérisés dans l'en-tête de paquet comme cellules d'opération et de maintenance ou également comme cellules de test, de chaque ligne d'arrivée (E'et E") faisant
partie de lignes d'arrivée au moins en double (E',E") et des paquets d'informations, caractérisés dans l'en-tête de paquet comme cellules d'informations utiles, de seulement une ligne d'arrivée (E' ou E") faisant partie des lignes d'arrivée au moins en double (E',E") en direction des réseaux de connexion au moins en double (KV1,KV2), et
que des paquets d'informations, qui sont redondants entre eux et qui sont commutés par l'intermédiaire des réseaux de connexion au moins en double (KV1,KV2 ), on n'en retransmet qu'un seul à chacune des lignes de départ considérées (A' et A") faisant partie de lignes de départ également au moins en double (A' et A").
